# EUROPEAN PATENT APPLICATION

(11) **EP 4 571 137 A1**
(43) Date of publication of application: **18.06.2025**
(21) Application number: 24189853.5
(22) Date of filing: 19.07.2024
(51) Int. Cl.: F16C 19/36, F16C 33/66, F16C 33/78, F16C 33/80, F03D 80/70, F16C 35/04, F16J 15/00, F16J 15/3204, F16J 15/3268, F16J 15/34, F16J 15/16, F16J 15/447

(54) **SEAL STRUCTURE FOR OIL-LUBRICATED BEARING**

(30) Priority: 14.12.2023 CN 202311726645
(71) Applicant: Sany Renewable Energy Co., Ltd, Beijing 102206 (CN)
(72) Inventor: ZHANG, Pengyuan, Beijing, 102206 (CN); ZHANG, Qin, Beijing, 102206 (CN)
(74) Representative: Monteiro Alves, Inês

(57) **Abstract**

Disclosed is a seal structure for an oil-lubricated bearing including a shaft system and a seal assembly. The shaft system includes a main shaft, a first bearing and a bearing seat. The bearing seat is formed with an oil return pipeline and an oil pool communicated with the oil return pipeline. The seal assembly includes an end cover, a first seal ring and a second seal ring. The end cover is provided around an outer periphery of the main shaft, the end cover is installed on the bearing seat, an oil return ring groove is formed on an inner wall surface of the end cover, and a bottom of the oil return ring groove is communicated with the oil return pipeline. The first seal ring and the second seal ring are provided oppositely at two sides of the end cover.

## Description

### TECHNICAL FIELD

The present application relates to the technical field of wind power, and in particular to a seal structure for an oil-lubricated bearing.

### BACKGROUND

There are two main types of transmission chain structures for large megawatt wind turbines. One is that the main shaft system and the gearbox are independent and non-integrated. The main shaft system is fixed to the main frame through the bearing seat and the gearbox is fixed to the main frame through the torque arm. Alternatively, the main shaft system and the gearbox are integrated together, the bearing seat in the main shaft system is connected to the primary gear ring of the gearbox, the torque arm of the gearbox is eliminated, and the entire transmission chain is fixed on the main frame by the bearing seat. In the former non-integrated structure, the main bearing is grease lubricated, while in the latter integrated structure, the main bearing usually shares the same oil lubrication system with the gearbox. Since the integrated transmission chain structure has a greater cost advantage, and the lubrication effect of oil lubrication is better than grease lubrication in winter, most industries tend to choose this integrated transmission chain structure.

The integrated transmission chain structure uses oil lubrication. If there is an oil leak, thousands of liters of lubricating oil may flow out in large quantities, which is not easy to clean and easy to cause a fire. Therefore, its sealing requirements are higher than grease lubrication.

The main shaft system in the integrated transmission chain is provided with a front-end seal located between the main shaft and the front cover, and a rear-end seal positioned between the bearing seat and the primary gear ring of the gearbox. Since both the bearing seat and the primary gear ring of the gearbox are non-rotating parts, a combination of plane sealant and seal ring is typically used, resulting in higher reliability for the rear-end seal. However, it poses significant challenges to seal the front-end cover of the main shaft. One challenge is from the relative rotation between the main shaft and the front-end cover, since the main shaft rotates, while the front-end cover is stationary. Another challenge is from the substantial radial and axial deformation of sealing area in the front-end cover due to wind load effects.

There are two solutions to seal the front-end of the main shaft system in the integrated transmission chain primarily: one consists of radial main seal, intermediate oil return and outer packing dustproof seal; the other consists of labyrinth seal, and outer packing dustproof seal.

For the first type, the radial main seal's lip and the main shaft need to be fitted with a large interference, and the interference amount should cover the spindle's maximum radial deformation at the sealing point. This sealing structure requires high hardness and smoothness of the sealing area of the main shaft, typically above HRC45. However, the main shaft of the large-megawatt transmission chain is usually castings and cannot achieve such high hardness. Therefore, a sealing sleeve is added to the main shaft. The main shaft is in interference connection with the sealing sleeve, and the sealing sleeve's surface undergoes induction hardening to increase hardness, therefore, after assembling, the sealing sleeve's outer ring is polished to achieve high hardness, smoothness, and concentricity. This structure provides high sealing reliability, but has the following drawbacks: (a) high cost, especially for large-diameter sealing sleeves; (b) risk of relative slippage between the main shaft and the sealing sleeve (due to significant deformation of the main shaft); (c) easy aging and damage because the radial main seal is made of rubber and works under large interference for a long time, thereby requiring periodic replacement.

The second type of the labyrinth seal involves providing a plurality of oil-blocking grooves and oil return grooves between the front cover and the main shaft. The oil-blocking grooves use narrow spaces to block oil, while the oil return grooves are communicated with the bearing seat's oil return hole at the bottom for quick oil return. This structure is cost-effective and does not require replacing wear-prone parts. However, due to significant deformation of the main shaft, large gaps must be provided in the oil-blocking grooves to avoid mechanical interference, resulting in poor oil-blocking efficiency and potential oil leakage.

Given the above circumstances, it is necessary to provide a new seal structure for cast main shaft and oil-lubricated bearings.

### SUMMARY

The main objective of the present application is to provide a seal structure for an oil-lubricated bearing to solve the technical problems of easy failure of seal structure and high maintenance cost in the related art.

In order to achieve the above-mentioned objective, the present application provides a seal structure for an oil-lubricated bearing, including
a shaft system including a main shaft, a first bearing and a bearing seat, the bearing seat being formed with an oil return pipeline and an oil pool communicated with the oil return pipeline; and
a seal assembly including an end cover, a first seal ring and a second seal ring,
wherein the end cover is provided around an outer periphery of the main shaft, the end cover is installed on the bearing seat, an oil return ring groove is formed on an inner wall surface of the end cover, and a bottom of the oil return ring groove is communicated with the oil return pipeline;
the first seal ring and the second seal ring are provided oppositely at two sides of the end cover, and the first seal ring and the second seal ring are both sealed and installed on an outer peripheral surface of the main shaft; and
the first seal ring is clamped between the first bearing and the end cover, a lip of the first seal ring is in interference connection with the end cover, and a lip of the second seal ring is in interference connection with the end cover.

In an embodiment, the seal assembly further includes an oil-blocking seal; a groove is formed on the outer periphery of the main shaft; the oil-blocking seal is embedded in the groove; a gap space is formed between the inner wall surface of the end cover and the main shaft; and the oil-blocking seal is configured to extend into the gap space.

In an embodiment, the oil-blocking seal includes a first oil-blocking seal strip, a second oil-blocking seal strip and a third oil-blocking seal strip;
the oil return ring groove includes a first oil return chamber and a second oil return chamber provided at intervals;
the gap space includes a first shut-off gap, a second shut-off gap and a third shut-off gap;
the first oil return chamber is communicated with the first seal ring through the first shut-off gap, the second oil return chamber and the first oil return chamber are communicated with each other through the second shut-off gap, and the second oil return chamber is communicated with the second seal ring through the third shut-off gap; and
the first oil-blocking seal strip, the second oil-blocking seal strip and the third oil-blocking seal strip are provided in a one-to-one correspondence with the first shut-off gap, the second shut-off gap and the third shut-off gap.

In an embodiment, a radial dimension of the first shut-off gap is not equal to a radial dimension of the second shut-off gap.

In an embodiment, a bottom of the first oil return chamber is communicated with the oil return pipeline; and/or
a bottom of the second oil return chamber is communicated with the oil return pipeline.

In an embodiment, a protrusion is formed on an outer wall surface of the oil-blocking seal, and the oil-blocking seal is in interference connection with the groove via the protrusion.

In an embodiment, a recess group is formed on the outer periphery of the main shaft, and the recess group is provided at an interval from the groove.

In an embodiment, the bearing seat is further formed with an oil collecting chamber and a liquid level control baffle; and
the liquid level control baffle is provided between the oil collecting chamber and the oil pool, a bottom of the first bearing is immersed in the oil collecting chamber, and a top height of the liquid level control baffle is lower than a bottom height of the first seal ring.

In an embodiment, the end cover includes a first side surface and a second side surface provided opposite to each other;
the lip of the first seal ring is configured to extend obliquely outward from an inner ring of a main body of the first seal ring and is in interference connection with the first side surface; and
the lip of the second seal ring is configured to extend obliquely outward from an inner ring of a main body of the second seal ring and is in interference connection with the second side surface.

In an embodiment, the main shaft is formed with a step surface, and the second seal ring is sandwiched between the second side surface and the step surface.

In the technical solution of the present application, the oil lubricating the first bearing will eventually flow out from the front and rear sides of the first bearing. When the oil flows out from the rear side, it enters the oil pool for oil circulation; when the oil flows out from the front side, it is blocked by the seal assembly. Most of the oil flowing out from the front side of the first bearing flows back to the first bearing and flows out from the rear side due to the block of the first sealing ring. A very small part of the oil will pass through the first seal ring. Part of the oil that pass through the first seal ring will enter the oil return ring groove, and flow to the oil pool through the oil return pipeline communicated with the bottom of the oil return ring groove, to guide the oil to flow back in time and enter the oil circulation. The second seal ring can block the pollution of the external environment to the oil, improve the service life of the oil, and also prevent the oil from leaking out after passing through the first seal ring.

The lip direction of the first seal ring is axial, and the lip direction of the second seal ring is also axial. In the wind turbine in the embodiment, when the wind wheel is subjected to an extreme load that is not perpendicular to the main shaft, the main shaft will move radially and axially relative to the bearing seat during the rotation process. When radial movement occurs, the interference of the lip of the second seal ring with the lip of the first seal ring does not change, the first seal ring can restrict the flow entering the oil return ring groove to maintain the sealing effect. When axial movement occurs, the interference of the lips of the second seal ring is reduced, but its minimum interference is greater than 0.5mm, which can ensure the dustproof effect. The interference of the lip of the first seal ring is increased. The sealing effect of the first seal ring becomes better, and the overall sealing effect will be enhanced.

The present application can maintain the sealing effect under extreme working conditions and prevent oil leakage. By providing a double axial seal ring, the sealing effect can be maintained or even enhanced when the main shaft moves radially and axially to a certain extent relative to the bearing seat. At the same time, the structure is relatively simple and easy to process, and has the advantages of good sealing effect and low cost. There is no need to provide a sealing sleeve, and the problem of large gap in the labyrinth oil blocking groove can also be solved, in addition, the oil-lubricated main bearing of a large megawatt wind turbine generator set is reliably sealed.

### BRIEF DESCRIPTION OF THE DRAWINGS

In order to more clearly illustrate the technical solutions in the embodiments of the present application or in the related art, a brief introduction will be given to the accompanying drawings required in the description of the embodiments or the related art. Obviously, the accompanying drawings in the following description are only some embodiments of the present application. For those skilled in the art, other accompanying drawings can be obtained based on the structures shown in these drawings without any creative effort.
FIG. 1 is a schematic cross-sectional view of a seal structure for an oil-lubricated bearing according to an embodiment of the present application.
FIG. 2 is an enlarged view of a portion "A" in FIG. 1.
FIG. 3 is an enlarged view of a portion "B" in FIG. 1.
FIG. 4 is a schematic cross-sectional view of a first seal ring in the seal structure for the oil-lubricated bearing according to an embodiment of the present application.
FIG. 5 is a first schematic cross-sectional view of an oil-blocking seal in the seal structure for the oil-lubricated bearing according to an embodiment of the present application.
FIG. 6 is a second schematic cross-sectional view of the oil-blocking seal in the seal structure for the oil-lubricated bearing according to an embodiment of the present application.
FIG. 7 is a third schematic cross-sectional view of the oil-blocking seal in the seal structure for the oil-lubricated bearing according to an embodiment of the present application.
FIG. 8 is a fourth schematic cross-sectional view of the oil-blocking seal in the seal structure for the oil-lubricated bearing according to an embodiment of the present application.
FIG. 9 is a fifth schematic cross-sectional view of the oil-blocking seal in the seal structure for the oil-lubricated bearing according to an embodiment of the present application.

### Description of reference signs

| reference signs | name | reference signs | name |
|---|---|---|---|
| 100 | seal structure for oil-lubricated bearing | 21 | end cover |
| 110 | gap space | 22 | first seal ring |
| 1101 | first shut-off gap | 23 | second seal ring |
| 1102 | second shut-off | 24 | oil-blocking seal |
| 1103 | third shut-off gap | 240 | protrusion |
| 1 | shaft system | 211 | oil return ring groove |
| 2 | seal assembly | 212 | first side surface |
| 3 | pressure plate | 213 | second side surface |
| 11 | main shaft | 2111 | first oil return chamber |
| 12 | first bearing | 2112 | second oil return chamber |
| 13 | bearing seat | 241 | first oil-blocking seal strip |
| 14 | second bearing | 242 | second oil-blocking seal strip |
| 111 | groove | 243 | third oil-blocking seal strip |
| 112 | recess group | 132 | oil pool |
| 113 | step surface | 133 | oil collecting chamber |
| 131 | oil return pipeline | 134 | liquid control baffle |
| 221 | main body | 222 | lip |

The realization of the objective, the functional feature, and the advantage of present application will be further described with reference to the drawings.

### DETAILED DESCRIPTION OF THE EMBODIMENTS

The technical solutions of the embodiments of the present application will be clearly and completely described below in conjunction with the accompanying drawings of the embodiments of the present application. It is obvious that the embodiments to be described are only some rather than all the embodiments of the present application. All other embodiments obtained by those of ordinary skill the art based on the embodiments of the present application without creative efforts should fall within the scope of the present application.

It should be noted that all the directional indications (such as up, down, left, right, front, rear, etc.) in the embodiments of the present application are only used to explain the relative positional relationship, movement, or the like of the components in a certain posture (as shown in the drawings). If the specific posture changes, the directional indication will change accordingly.

Besides, the descriptions associated with, "first" and "second", etc. in the present application are merely for descriptive purposes, and cannot be understood as indicating or suggesting relative importance or implicitly indicating the number of the indicated technical feature. Therefore, the feature associated with "first" or "second" can expressly or implicitly include at least one such feature. In the description of the present application, "a plurality of" means at least two groups, such as two groups, three groups, etc., unless otherwise clearly and specifically defined.

In the present application, unless otherwise definitely specified and limited, terms such as "connect" and "fix" should be understood in a broad sense. For example, "connect" may be a fixed connection, a detachable connection or integrated as a whole; may be a mechanical connection or an electrical connection; may be directly connected or indirectly connected via an intermediate medium; may also be an internal communication between two components or the interactive relationship between two components, unless otherwise explicitly limited. For those of ordinary skill in the art, the specific meaning of the above-mentioned terms in the present application can be understood according to specific situations.

In addition, the technical solutions between the various embodiments of the present application can be combined with each other, but it must be based on the fact that those of ordinary skill in the art can implement it. When the combination of technical solutions is contradictory or cannot be implemented, it should be deemed that such combination of technical solutions does not exist and is not within the scope of the present application.

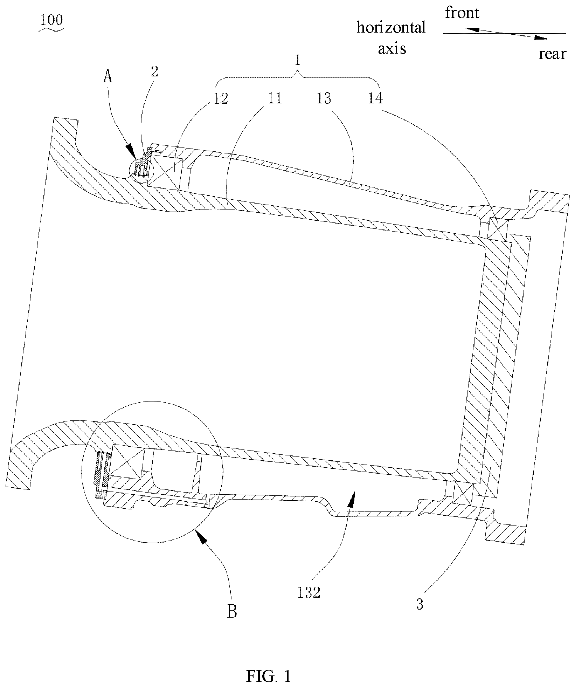

As shown in FIG. 1 to FIG. 4, the present application provides a seal structure for an oil-lubricated bearing 100, which includes a shaft system 1 and a seal assembly 2. The shaft system 1 includes a main shaft 11, a first bearing 12 and a bearing seat 13, and the bearing seat 13 is formed with an oil return pipeline 131 and an oil pool 132 communicated with the oil return pipeline 131. The seal assembly 2 includes an end cover 21, a first seal ring 22 and a second seal ring 23. The end cover 21 is provided on the outer periphery of the main shaft 11 and installed on the bearing seat 13. An inner wall of the end cover 21 is formed with an oil return ring groove 211, and the bottom of the oil return ring groove 211 is communicated with the oil return pipeline 131. The first seal ring 22 and the second seal ring 23 are oppositely provided at two sides of the end cover 21, and the first seal ring 22 and the second seal ring 23 are both sealed and installed on the outer peripheral surface of the main shaft 11. The first seal ring 22 is sandwiched between the first bearing 12 and the end cover 21, the lip of the first seal ring 22 is in interference connection with the end cover 21, and the lip of the second seal ring 23 is in interference connection with the end cover 21.

In the above embodiment, the first bearing 12 specifically includes a bearing outer ring, a bearing inner ring and a rolling element provided in a raceway therebetween. The bearing outer ring is fixedly mounted on the bearing seat 13 (specifically, the bearing outer ring is in interference connection with the inner circumferential surface of the bearing seat 13), and the bearing inner ring is clamped and mounted on the outer circumference of the main shaft 11 (specifically, it is in interference connection with the outer circumferential surface of the main shaft 11), thereby realizing the radial positioning of the first bearing 12. The axial positioning of the first bearing 12 is achieved by the rear end surface of the first bearing 12 being fitted with a step surface of the bearing seat 13, and the front end surface of the first bearing 12 being fitted with the step surface of the main shaft 11, that is to say, the first bearing 12 is sandwiched between the step surface of the bearing seat 13 and the step surface of the main shaft 11. In order to form an effective oil film between the rolling element and the raceway as soon as possible, it is lubricated by oil bath and multi-point spraying, and the lubricated oil will pass through the oil pool 132 and enters the oil tank. After being filtered and cooled, the lubricated oil enters the bearing again through spraying, and the oil can be recycled. The end cover 21 can be fixed on the end face of the bearing seat 13 by screws in the circumferential direction, and the end cover 21 and the oil pool 132 are respectively located at both sides of the first bearing 12.

The oil lubricating the first bearing 12 will eventually flow out from the front and rear sides of the first bearing 12. When the oil flows out from the rear side, it enters the oil pool 132 for oil circulation; when the oil flows out from the front side, it is blocked by the seal assembly 2. Most of the oil flowing out from the front side of the first bearing 12 flows back to the first bearing 12 and flows out from the rear side due to the block of the first sealing ring 22. A very small part of the oil will pass through the first seal ring 22 (depending on the sealing effect of the lip of the first seal ring 22). Part of the oil that pass through the first seal ring 22 will enter the oil return ring groove 211, and flow to the oil pool 132 through the oil return pipeline 131 communicated with the bottom of the oil return ring groove 211, to guide the oil to flow back in time and enter the oil circulation. The second seal ring 23 can block the pollution of the external environment to the oil, improve the service life of the oil, and also prevent the oil from leaking out after passing through the first seal ring 22.

The lip direction of the first seal ring 22 is axial, and the lip direction of the second seal ring 23 is also axial. In the wind turbine in the embodiment, when the wind wheel is subjected to an extreme load that is not perpendicular to the main shaft 11, the main shaft 11 will move radially and axially relative to the bearing seat 13 during the rotation process. When radial movement occurs, the interference of the lip of the second seal ring 23 with the lip of the first seal ring 22 does not change, the first seal ring 22 can restrict the flow entering the oil return ring groove 211 to maintain the sealing effect. When axial movement occurs (the main shaft 11 moves forward relative to the bearing seat 13), the interference of the lips of the second seal ring 23 is reduced, but its minimum interference is greater than 0.5mm, which can ensure the dustproof effect. The interference of the lip of the first seal ring 22 is increased. The sealing effect of the first seal ring 22 becomes better, and the overall sealing effect will be enhanced.

In this embodiment, the sealing effect can maintain under extreme working conditions to prevent oil leakage. By providing a double axial seal ring, when the main shaft 11 moves radially and axially to a certain extent relative to the bearing seat 13, the sealing effect can be maintained or even enhanced. At the same time, the structure is relatively simple and easy to process, and has the advantages of good sealing effect and low cost.

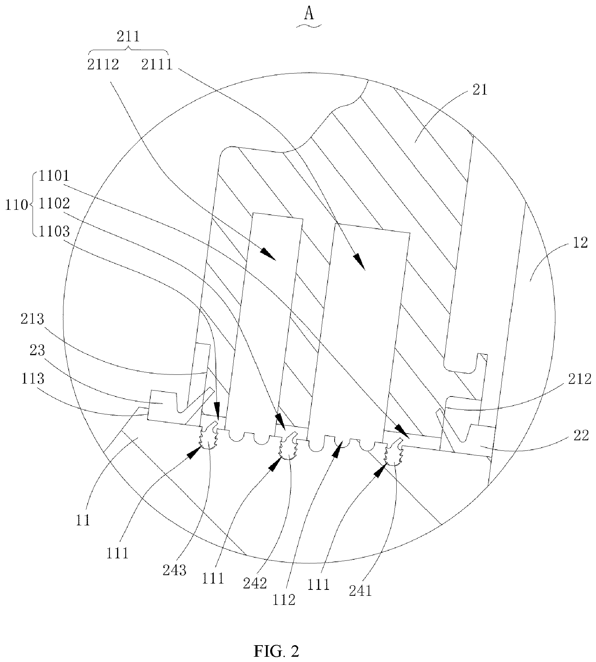

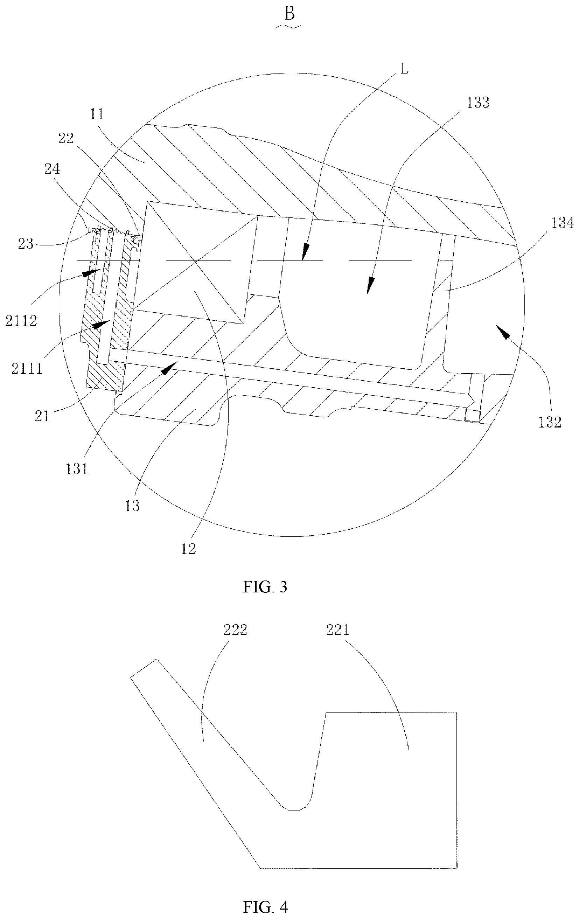

As shown in FIG. 2, in an embodiment, the end cover 21 includes a first side surface 212 and a second side surface 213 which are provided opposite to each other. A lip of the first seal ring 22 extends obliquely outward from the inner ring of the main body of the first seal ring 22, and the lip of the first seal ring 22 is interference-fitted with the first side surface 212. A lip of the second seal ring 23 extends obliquely outward from the inner ring of the main body of the second seal ring 23, and the lip of the second seal ring 23 is interference-fitted with the second side surface 213. The first side surface 212 and the second side surface 213 may be sunken to a certain extent relative to the front and rear end surfaces of the end cover 21, to cooperate with the first seal ring 22 and the second seal ring 23. As shown in FIG. 4, the first seal ring 22 specifically includes a main body 221 and a lip 222. The inner ring of the main body 221 is tightly clamped on the outer circumferential surface of the main shaft 11. The lip 222 is connected to a position of the inner ring of the main body 221 close to the main shaft 11, and extends obliquely from the inner ring in a direction away from the main shaft 11. In addition, the structure of the second seal ring 23 is similar to that of the first seal ring 22, except that the first seal ring 22 and the second seal ring 23 are provided opposite to each other.

It should be noted that the cross-sectional shape of the first seal ring 22 and the second seal ring 23 is in the shape of "V", as shown in FIG. 4, the structure of the present application is not limited thereto, and may also be a structure similar to the "V" shaped seal ring, in which the lip interference is axial.

As shown in FIG. 2, in one embodiment, the main shaft 11 is formed with a step surface 113, and the second seal ring 23 is sandwiched between the second side surface 213 and the step surface 113 to achieve axial fixation. The first seal ring 22 is an inner axial seal ring for radial positioning. The inner circumferential surface of the first seal ring 22 is in the interference connection with the outer circumferential surface of the main shaft 11 for axial positioning. The rear end surface of the first seal ring 22 is in contact with the front end surface of the first bearing 12, and the lip is in contact with the first side surface 212 of the end cover 21. The second seal ring 23 is an outer axial seal ring for radial positioning. The inner circumferential surface of the second seal ring 23 is in interference connection with the outer circumferential surface of the main shaft 11 for axial positioning. The front end surface of the second seal ring 23 is in contact with the step surface 113 of the main shaft 11, and the lip is in interference connection with the second side surface 213 of the end cover 21.

As shown in FIG. 2 and FIG. 3, in one embodiment, the seal assembly 2 also includes an oil-blocking seal 24, a groove 111 is formed on the outer circumference of the main shaft 11, and the oil-blocking seal 24 is embedded in the groove 111. A gap space 110 is formed between the inner wall surface of the end cover 21 and the main shaft 11, and the oil-blocking seal 24 extends into the gap space 110. The oil-blocking seal 24 reduces the gap at that position and improves the oil interception effect. The oil passing through the first seal ring 22 flows into the oil return ring groove 211 or flows to the second seal ring 23 through the gap space 110. The oil-blocking seal 24 can block the oil, for example, the oil are prevented from flowing from the first seal ring 22 into the oil return ring groove 211, so that part of the oil flows back and flows out from the rear side of the first bearing 12 into the oil pool 132. The oil-blocking seal 24 can also block the oil from flowing from the oil return ring groove 211 to the second seal ring 23, thereby avoiding the oil leakage caused by the failure of the second seal ring 23. Specifically, the root of the oil-blocking seal 24 is embedded in the groove 111, and the top of the oil-blocking seal 24 can be designed as a flexible structure, such as a lip. If the top of the oil-blocking seal 24 is a lip structure, the lip extends towards to the first bearing 12, and the end cover 21 is installed from the outside to the inside (i.e., from the front to the back), which will not cause the lip of the oil-blocking seal 24 to be folded. In addition, the shape of the lips of the first seal ring 22 and the second seal ring 23 can be observed during installation, and the phenomenon of lip folding during installation can also be avoided.

It should be noted that when operating under normal working conditions, the oil-blocking seal 24 will not contact the end cover 21, therefore it will be basically free of wear. In this embodiment, the oil-blocking seal 24 has the advantages of good oil interception effect and increased service life.

Specifically, the gap between the inner wall surface of the end cover 21 and the outer circumferential surface of the main shaft 11 can be designed to be 5mm. Under normal circumstances, the gap between the top of the oil-blocking seal 24 and the end cover 21 is set to be about 2mm. If the main shaft 11 produces radial movement, the end cover 21 and the main shaft 11 are offset. The gap between the top of the oil-blocking seal 24 and the inner wall surface of the end cover 21 increases, or the top is bent, and there is no rigid contact between the two. The inner wall surface of the end cover 21 is smooth (not less than Ra2.5), and the oil-blocking seal 24 is also made of wear-resistant material. Even in flexible contact, the wear of the oil-blocking seal 24 is small. When axial movement occurs, the gap between the top of the oil-blocking seal 24 and the inner wall surface of the end cover 21 remains unchanged, the auxiliary oil blocking effect is not affected, and the oil-blocking seal 24 will not be worn.

In the related art, a small gap is designed between the inner surface of the end cover and the outer circumferential surface of the main shaft, the gap is specifically from 0.5mm to 0.6mm. In this embodiment, a larger gap is provided to reduce the processing and assembly difficulty of the end cover 21, and the main shaft 11 have a certain radial displacement (less than 5mm). It should be noted that the gap between the inner wall surface of the end cover 21 and the outer circumferential surface of the main shaft 11 is not limited to 5mm, and those skilled in the art can set it adaptively as needed.

As shown in FIG. 2, the number of the oil-blocking seal 24 is not limited to one, but may also be multiple. In one embodiment, when there are three oil-blocking seals 24, the groove 111 is provided in one-to-one correspondence with the three oil-blocking seals 24. Specifically, the oil-blocking seal 24 includes a first oil-blocking seal strip 241, a second oil-blocking seal strip 242 and a third oil-blocking seal strip 243. The oil return ring groove 211 includes a first oil return chamber 2111 and a second oil return chamber 2112 which are provided at intervals. The gap space 110 includes a first shut-off gap 1101, a second shut-off gap 1102 and a third shut-off gap 1103. The first oil return chamber 2111 is communicated with first seal ring 22 through the first shut-off gap 1101, the second oil return chamber 2112 is communicated with the first oil return chamber 2111 through the second shut-off gap 1102, and the second oil return chamber 2112 is communicated with the second seal ring 23 through the third shut-off gap 1103. The first oil-blocking seal strip 241, the second oil-blocking seal strip 242 and the third oil-blocking seal strip 243 are provided in one-to-one correspondence with the first shut-off gap 1101, the second shut-off gap 1102 and the third shut-off gap 1103. The oil flowing out from the front side of the first bearing 12 enters the first shut-off gap 1101 through part of the first seal ring 22, then it will enter the first oil return chamber 2111 with a small flow rate under the action of the first oil-blocking seal strip 241. An oil return hole can be opened at the bottom of the first oil return chamber 2111, and the oil return hole can be communicated with the oil return pipeline 131 at the bottom of the bearing seat 13. The oil in the first oil return chamber 2111 flows to the oil pool 132 through the oil return pipeline 131, thereby achieving the oil circulation. If the first oil return chamber 2111 does not return oil in time, part of the oil will overflow into the second oil return chamber 2112 through the second shut-off gap 1102. The second oil-blocking seal strip 242 provided here controls the flow rate flowing into and out of the second oil return chamber 2112. Similarly, the bottom of the second oil return chamber 2112 can be communicated with the oil return pipeline 131, or the oil in the second oil return chamber 2112 can return to the first oil return chamber 2111 under the action of gravity, and then flow to the oil pool 132 through the oil return pipeline 131, thereby achieving the oil circulation. The third shut-off gap 1103 is provided between the second seal ring 23 and the second oil return chamber 2112. By providing the third oil-blocking seal strip 243 here, the oil is blocked from flowing from the second oil return chamber 2112 to the second seal ring 23. Under normal working conditions, the first oil-blocking seal strip 241, the second oil-blocking seal strip 242 and the third oil-blocking seal strip 243 will not contact the end cover, but will extend into the first shut-off gap 1101, the second shut-off gap 1102 and the third shut-off gap 1103 respectively to block the oil. The oil is blocked in stages to facilitate timely return of the oil. The service life is long and the oil shut-off effect is stable.

It should be noted that during assembly, the lip interference of the first seal ring 22 can be set to about 3mm, and the lip interference of the second seal ring 23 can be set to about 5mm. When the main shaft 11 moves axially toward the blade side, the lip interference of the second seal ring 23 is reduced to ensure that its maximum clearance is not greater than 0.5mm. When the main shaft 11 moves axially relative to the bearing seat 13 toward the blade side within 5mm, the dustproof and sealing effect of the second seal ring 23 can be maintained. Meanwhile, the lip interference of the first seal ring 22 is increased, and the maximum interference can reach 8mm, so that the sealing effect of the first seal ring 22 is better and the overall sealing effect is enhanced.

On the contrary, when the main shaft 11 moves axially toward the motor side, the lip interference of the second seal ring 23 increases, and the maximum interference can reach 10mm, which can enhance the dustproof and sealing effect of the second seal ring 23. The lip interference of the first seal ring 22 decreases or even partially opens for 2mm. At this time, the flow through the first seal ring 22 increases, but there are 3 oil-blocking seals and 3 shut-off gaps behind the first seal ring 22, which will block the oil and ensure that the oil flows back to the oil pool 132 from the oil return hole.

In summary, in the present application, it can be compatible with a certain degree of radial and axial displacement of the main shaft 11 and maintain the sealing effect. The first seal ring 22 close to the first bearing 12 has a smaller interference than the second seal ring 23, which can extend its service life.

As shown in FIG. 2, in one embodiment, the radial dimensions of the first shut-off gap 1101 and the second shut-off gap 1102 are different. Specifically, the main shaft 11 and the end cover 21 are formed with a step at the gap space, and the radial positions of the first shut-off gap 1101 and the second shut-off gap 1102 corresponding to the step are different. The radial position of the second shut-off gap 1102 can be the same as the radial position of the third shut-off gap 1103. This structure can ensure that the lip of the first oil-blocking seal strip 241 can cover the second shut-off gap 1102, thereby preventing the oil bypassing the first seal ring 22 from directly spraying from the first shut-off gap 1101 to the second seal ring 23 at the outermost side.

As shown in FIG. 3, in one embodiment, the bottom of the first oil return chamber 2111 is communicated with the oil return pipeline 131, that is, an oil return hole is provided at the bottom of the first oil return chamber 2111, and the oil return hole is communicated with the oil return pipeline 131. The oil in the first oil return chamber 2111 flows to the oil pool 132 through the oil return pipeline 131, thereby achieving the oil circulation. In addition, a structure similar to that of the first oil return chamber 2111 may also be provided at the bottom of the second oil return chamber 2112, so that the oil can directly flow back when in the second oil return chamber 2112. Specifically, two oil return holes can be provided at the bottom of the first oil return chamber 2111, and two oil return holes can also be provided at the bottom of the second oil return chamber 2112. The four oil return holes are located on the same circumference but at different angles. The first oil return chamber 2111 and the second oil return chamber 2112 are communicated with the oil return pipeline 131 through their respective oil return holes. The oil return pipeline 131 is not limited to one, and can also correspond to each oil return hole one by one.

It should be noted that the structure of the oil return ring groove 211 is not limited to the above-mentioned two-stage oil return chamber structure. It can also be a multi-stage oil return chamber structure with more stages. The multi-stage oil return chamber can be provided to achieve multi-stage blocking of the oil. Similarly, an oil-blocking seal strip can be provided between each oil return chamber to control the amount of the oil entering the oil return chamber. The oil in the oil return chamber is guided to the oil pool 132 through the oil return pipeline 131 at the bottom of the oil return chamber, thereby achieving the oil circulation. In addition, as shown in FIG. 2, a recess group 112 can also be provided on the periphery of the main shaft 11. The recess group 112 is composed of a plurality of annular grooves. The recess group 112 is in a maze shape. The recess group 112 is spaced apart from the groove 111. The recess group 112 can further block the oil from flowing in the gap space 110, thereby improving the sealing effect. Even if the first seal ring 22 near the bearing side has poor oil blocking effect or fails due to wear, there are a plurality of oil-blocking seal strips between the first seal ring 22 and the second seal ring 23 to achieve a labyrinth interception effect. With sufficient oil return holes, the entire sealing structure still is reliable.

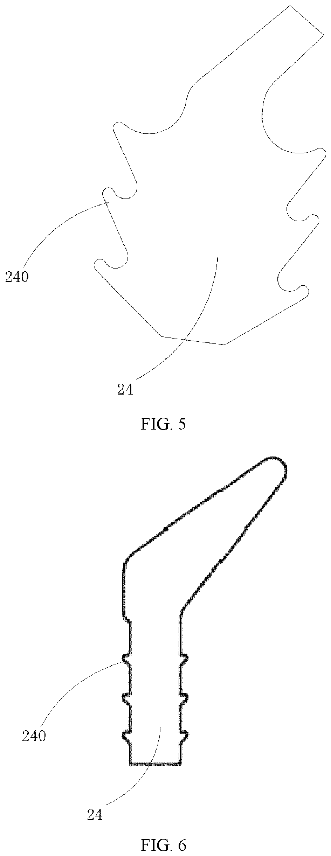

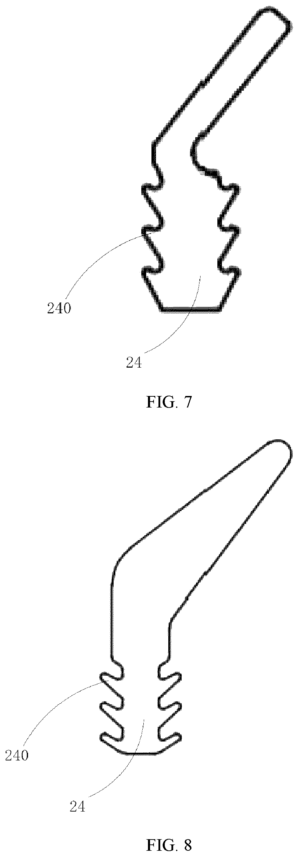

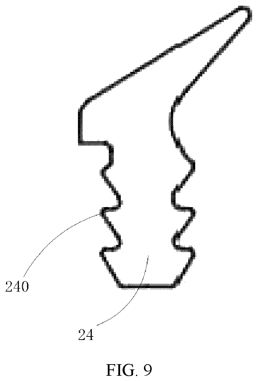

As shown in FIG. 2 and FIG. 5 to FIG. 9, in one embodiment, a protrusion 240 is formed on the outer wall surface of the oil-blocking seal 24, and the oil-blocking seal 24 is interference fit with the groove 111 through the protrusion 240. The protrusion 240 can ensure that the oil-blocking seal 24 will not be thrown out of the groove 111 during the rotation of the main shaft 11. There can be protrusions 240 provided in multiple layers, and each layer of protrusions 240 is annular and extends outward in the direction away from the central axis of the main shaft 11. When the main shaft 11 rotates to generate centrifugal force, the oil-blocking seal 24 will tend to be thrown out, and the protrusion 240 will clamp the side wall of the groove 111 to prevent the oil-blocking seal 24 from moving. The structure is installed in the groove 111 along the protrusion 240, and the protrusion 240 will not be folded. The structure of the oil-blocking seal 24 can be specifically as shown in FIG. 5 to FIG. 9, or it can also be a combination of the illustrated structures.

As shown in FIG. 1, in one embodiment, the shaft system 1 further includes a second bearing 14, and the seal structure for an oil-lubricated bearing 100 further includes a pressure plate 3. The second bearing 14 and the first bearing 12 are installed in the bearing seat 13 at intervals, and the pressure plate 3 is installed on the end face of the main shaft 11. The pressure plate 3 abuts against the side of the second bearing 14 away from the first bearing 12, and the oil pool 132 is communicated with the first bearing 12 and the second bearing 14. The pressure plate 3 is specifically fastened to the end face of the main shaft 11 by evenly distributing screws in the circumferential direction, and the pressure plate 3 also presses the second bearing 14 through its own end face, so that the axial force can be transmitted to the entire transmission system, thereby realizing the axial fastening of the shaft system 1 as a whole.

Similar to the installation method of the first bearing 12, the outer circumferential surface of the second bearing 14 is interference fit with the inner circumferential surface of the bearing seat 13, and the inner circumferential surface of the second bearing 14 is interference fit with the outer circumferential surface of the main shaft 11 to achieve radial positioning. The front end face of the second bearing 14 is in contact with another step surface of the bearing seat 13, and the rear end face of the second bearing 14 is pressed against the front end face of the pressure plate 3 to achieve axial positioning.

The bearing seat 13 is specifically fastened to the external base frame by bolts. After installation, the angle between the central axis of the shaft system 1 (i.e., the central axis of the main shaft 11, the first bearing 12, the second bearing 14, etc.) and the horizontal axis is from 5° to 8°. As shown in FIG. 1, the first bearing 12 is at the front end, and the height of its center position is higher than the height of the second bearing 14. Therefore, under the action of gravity, the oil will spontaneously flow from the first bearing 12 through the oil pool 132 to the second bearing 14, and then flow into the oil tank.

As shown in FIG. 3, in one embodiment, the bearing seat 13 is further formed with an oil collecting chamber 133 and a liquid level control baffle 134, the liquid level control baffle 134 is disposed between the oil collecting chamber 133 and the oil pool 132, the bottom of the first bearing 12 is immersed in the oil collecting chamber 133, and the top height of the liquid level control baffle 134 is lower than the bottom height of the first seal ring 22. Before the main shaft 11 starts to rotate, the lubricating oil in the oil collecting chamber 133 is at the designed liquid level shown by the dotted line labeled "L" in FIG. 3, that is, the height of the oil is flush with the height of the liquid level control baffle 134, ensuring that more than half of the rolling element at the lowest position of the first bearing 12 is immersed in the oil. The upper area of the first bearing 12 and the second bearing 14 can be sprayed through the oil nozzle for 1 to 3 minutes.

During the rotation of the main shaft 11, the rolling elements of the first bearing 12 continuously rotate in and out of the oil collecting chamber 133, causing oil to splash and be carried out. The oil sprayed on the first bearing 12 will splash, adhere, and flow into the raceway. The oil will eventually flow out from the front and rear sides of the first bearing 12. If the oil flows out from the rear side, it enters the oil collecting chamber 133, and overflows from the liquid level control baffle 134 to the oil pool 132, thereby achieving the oil circulation. If the oil flows out from the front side, it is blocked by the seal assembly 2.

After shutdown, there will be no oil leakage. After shutdown, the oil spraying on the first bearing 12 and the second bearing 14 stops, and the height of the lower oil is flush with the height of the liquid level control baffle 134. At this time, the first seal ring 22 at the lowest position in the seal assembly 2 is not immersed in the oil, which means that the seal assembly 2 is not in the oil as a whole, so there will be no shutdown leakage.

The above are only some embodiments of the present application, and are not intended to limit the scope of the present application. Under the concept of the present application, equivalent structural transformations made according to the description and drawings of the present application, or direct/indirect application in other related technical fields, are included in the scope of the present application.

## Claims

1. A seal structure for an oil-lubricated bearing, **characterized by** comprising:
a shaft system (1) comprising a main shaft (11), a first bearing (12) and a bearing seat (13), the bearing seat (13) being formed with an oil return pipeline (131) and an oil pool (132) communicated with the oil return pipeline (131); and
a seal assembly (2) comprising an end cover (21), a first seal ring (22) and a second seal ring (23),
wherein the end cover (21) is provided around an outer periphery of the main shaft (11), the end cover (21) is installed on the bearing seat (13), an oil return ring groove (211) is formed on an inner wall surface of the end cover (21), and a bottom of the oil return ring groove (211) is communicated with the oil return pipeline (131);
the first seal ring (22) and the second seal ring (23) are provided oppositely at two sides of the end cover (21), and the first seal ring (22) and the second seal ring (23) are both sealed and installed on an outer peripheral surface of the main shaft (11); and
the first seal ring (22) is clamped between the first bearing (12) and the end cover (21), a lip of the first seal ring (22) is in interference connection with the end cover (21), and a lip of the second seal ring (23) is in interference connection with the end cover (21).

2. The seal structure for the oil-lubricated bearing according to claim 1, wherein the seal assembly (2) further comprises an oil-blocking seal (24); a groove (111) is formed on the outer periphery of the main shaft (11); the oil-blocking seal (24) is embedded in the groove (111); a gap space (110) is formed between the inner wall surface of the end cover (21) and the main shaft (11); and the oil-blocking seal (24) is configured to extend into the gap space (110).

3. The seal structure for the oil-lubricated bearing according to claim 2, wherein the oil-blocking seal (24) comprises a first oil-blocking seal strip (241), a second oil-blocking seal strip (242) and a third oil-blocking seal strip (243);
the oil return ring groove (211) comprises a first oil return chamber (2111) and a second oil return chamber (2112) provided at intervals;
the gap space (110) comprises a first shut-off gap (1101), a second shut-off gap (1102) and a third shut-off gap (1103);
the first oil return chamber (2111) is communicated with the first seal ring (22) through the first shut-off gap (1101), the second oil return chamber (2112) and the first oil return chamber (2111) are communicated with each other through the second shut-off gap (1102), and the second oil return chamber (2112) is communicated with the second seal ring (23) through the third shut-off gap (1103); and
the first oil-blocking seal strip (241), the second oil-blocking seal strip (242) and the third oil-blocking seal strip (243) are provided in a one-to-one correspondence with the first shut-off gap (1101), the second shut-off gap (1102) and the third shut-off gap (1103).

4. The seal structure for the oil-lubricated bearing according to claim 3, wherein a radial dimension of the first shut-off gap (1101) is not equal to a radial dimension of the second shut-off gap (1102).

5. The seal structure for the oil-lubricated bearing according to claim 3, wherein a bottom of the first oil return chamber (2111) is communicated with the oil return pipeline (131); and/or
a bottom of the second oil return chamber (2112) is communicated with the oil return pipeline (131).

6. The seal structure for the oil-lubricated bearing according to claim 2, wherein a protrusion (240) is formed on an outer wall surface of the oil-blocking seal (24), and the oil-blocking seal (24) is in interference connection with the groove (111) via the protrusion (240).

7. The seal structure for the oil-lubricated bearing according to claim 2, wherein a recess group (112) is formed on the outer periphery of the main shaft (11), and the recess group (112) is provided at an interval from the groove (111).

8. The seal structure for the oil-lubricated bearing according to any one of claims 1 to 7, wherein the bearing seat (13) is further formed with an oil collecting chamber (133) and a liquid level control baffle (134); and
the liquid level control baffle (134) is provided between the oil collecting chamber (133) and the oil pool (132), a bottom of the first bearing (12) is immersed in the oil collecting chamber (133), and a top height of the liquid level control baffle (134) is lower than a bottom height of the first seal ring (22).

9. The seal structure for the oil-lubricated bearing according to any one of claims 1 to 7, wherein the end cover (21) comprises a first side surface (212) and a second side surface (213) provided opposite to each other;
the lip of the first seal ring (22) is configured to extend obliquely outward from an inner ring of a main body of the first seal ring (22) and is in interference connection with the first side surface (212); and
the lip of the second seal ring (23) is configured to extend obliquely outward from an inner ring of a main body of the second seal ring (23) and is in interference connection with the second side surface (213).

10. The seal structure for the oil-lubricated bearing according to claim 9, wherein the main shaft (11) is formed with a step surface (113), and the second seal ring (23) is sandwiched between the second side surface (213) and the step surface (113).
